Europäisches Patentamt

European Patent Office

Office européen des brevets

(11) Veröffentlichungsnummer: **0 471 414 A2**

# EUROPÄISCHE PATENTANMELDUNG

(21) Anmeldenummer: **91202068.2**

(22) Anmeldetag: **13.08.91**

(51) Int. Cl.⁵: **H04B 10/20**

(30) Priorität: **16.08.90 DE 4025834**

(43) Veröffentlichungstag der Anmeldung:
**19.02.92 Patentblatt 92/08**

(84) Benannte Vertragsstaaten:
**DE FR GB IT**

(71) Anmelder: **Philips Patentverwaltung GmbH**
**Wendenstrasse 35 Postfach 10 51 49**
**W-2000 Hamburg 1(DE)**

(84) **DE**

(71) Anmelder: **N.V. Philips' Gloeilampenfabrieken**

Groenewoudseweg 1
**NL-5621 BA Eindhoven(NL)**

(84) **FR GB IT**

(72) Erfinder: **Stege, Peter**
**Von-Suppé-Strasse 4**
**W-2000 Hamburg 73(DE)**

(74) Vertreter: **Hartmann, Heinrich, Dipl.-Ing. et al**
**Philips Patentverwaltung GmbH**
**Wendenstrasse 35 Postfach 10 51 49**
**W-2000 Hamburg 1(DE)**

(54) **Datenübertragungseinrichtung, insbesondere für eine Röntgendiagnostikanlage.**

(57) Die Erfindung betrifft eine Datenübertragungseinrichtung, insbesondere für eine Röntgenanlage, mit mehreren Komponenten, denen je ein Datenübertragungsknoten zugeordnet ist, deren Datenein- und -ausgänge mit Lichtempfängern bzw. mit Lichtsendern gekoppelt sind, die über Lichtwellenleiter zu einem Ring zusammengeschaltet sind. Ein mehrfaches Durchlaufen des Ringes durch einen Lichtimpuls wird dabei dadurch verhindert, daß jeder Knoten Mittel zum Unterbrechen des Übertragungspfades zwischen seinem Lichtempfänger und seinem Lichtsender enthält und ein die Mittel steuerndes Zeitglied, das im Sendebetrieb des zugehörigen Datenübertragungsknotens diese Mittel während eines Zeitraums aktiviert, der größer ist als die Umlaufzeit eines Lichtimpulses im Ring und der am Ende eines Lichtimpulses beginnt.

FIG.2

Die Erfindung betrifft eine Datenübertragungseinrichtung, insbesondere für eine Röntgenanlage, mit mehreren Komponenten, denen je ein Datenübertragungsknoten zugeordnet ist, deren Datenein- und -ausgänge mit Lichtempfängern bzw. mit Lichtsendern gekoppelt sind, die über Lichtwellenleiter zu einem Ring zusammengeschaltet sind.

Eine solche Einrichtung ist aus der EP-PS 136 645 bekannt. Die am Datenausgang eines Datenübertragungsknotens erzeugten Daten werden von dem zugehörigen Lichtsender in Lichtsignale umgesetzt, die über einen Lichtwellenleiter den Licht-empfänger eines anderen Datenübertragungskno-tens erreichen, von dessen Lichtsender wiederum das Signal zum nächsten Übertragungsknoten übertragen wird usw. Wenn nicht besondere Maßnahmen getroffen werden, besteht die Gefahr, daß ein Lichtimpuls nach dem Erreichen des Lichtempfängers des Datenübertragungsknotens, von dem er ursprünglich ausgegangen war, den Ring ein zweites Mal und danach ein weiteres Mal durchläuft, so daß das Licht ständig im Ring umlaufen würde und eine Datenübertragung unmöglich wäre.

Um ein solches Umlaufen zu vermeiden, ist es aus der JP-OS 1-117446 bekannt, in einem Datenübertragungsring nach dem Aussenden eines (aus mehreren Bits bestehenden) Signals den Übertragungsweg solange zu unterbrechen, bis dieses Signal als Ganzes wieder über den Ring zurückgekehrt ist. Diese Lösung funktioniert aber nur dann, wenn sichergestellt ist, daß nicht zwei Datenübertragungsknoten gleichzitig ein Signal aussenden können. Bei bestimmten Datenübertragungseinrichtungen ist diese Voraussetzung aber nicht erfüllt, beispielsweise bei solchen, die nach dem sogenannten CAN-Protokoll arbeiten (CAN = Controller Area Network). Bei letzteren können mehrere Da-tenübertragungsknoten zu Beginn einer Übertra-gung gleichzeitig Daten aussenden.

Es ist Aufgabe der vorliegenden Erfindung, eine Datenübertragungseinrichtung so auszugestalten, daß auch dann, wenn in dieser Einrichtung mehrere Knoten wenigstens zeitweise gleichzeitig Nachrichten aussenden können, ein ständiges Umlaufen eines Lichtimpulses zuverlässig unterbunden wird. Diese Aufgabe wird erfindungsgemäß dadurch gelöst, daß jeder Knoten Mittel zum Unterbrechen des Übertragungspfades zwischen seinem Lichtempfänger und seinem Lichtsender enthält und ein die Mittel steuerndes Zeitglied, das im Sendebetrieb des zugehörigen Datenübertragungsknotens diese Mittel während eines Zeitraums aktiviert, der größer ist als die Umlaufzeit eines Lichtimpulses im Ring und der am Ende eines Lichtimpulses beginnt.

Unter "Sendebetrieb" wird dabei nicht das Weiterleiten eines von dem im Ring vorausgehenden Knoten empfangenen Signals an den nachfolgenden Knoten bezeichnet, sondern das Aussenden eines von diesem Knoten erstmalig ausgehenden Signals. Bei der Erfindung aktiviert das Zeitglied die Mittel zum Unterbrechen des Übertragungspfades (so daß der Übertragungspfad zwi-schen Lichtempfänger und Lichtsender unterbro-chen ist) erst bei Ende eines von ihm ausgehenden Lichtimpulses. Diese Unterbrechung dauert länger als die Umlaufzeit eines Lichtimpulses in dem Ring, so daß der Übertragungspfad zwischen dem Lichtempfänger und dem Lichtsender des im Sendbetrieb befindlichen Datenübertragungsknotens auch dann noch unterbrochen ist, wenn der am Lichtempfänger (nach einem Umlauf in dem Ring) eintreffende Lichtimpuls geendet hat. Endet dann die Unterbrechung, dann ist der Lichtimpuls verschwunden, so daß er keinen zweiten Umlauf in dem Ring machen kann. Die Unterbrechungszeit sollte allerdings nicht zu lang gewählt werden und kleiner sein als die für die übertragung eines Bit erforderliche Zeit, vorzugsweise klein im Vergleich zu dieser Zeit.

Bei verschiedenen Datenbausteinen - beispielsweise solchen, die nach dem CAN-Protokoll arbeiten, wird ein Signal am Dateneingang nicht zum Datenausgang weitergegeben. Eine dafür geeignete Weiterbildung der Erfindung sieht vor, daß der Datenübertragungsknoten einen Datenbaustein enthält, bei dem die an seinem Dateneingang erscheinenden Daten nicht zum Ausgang weitergegeben werden und daß die Mittel zum Unterbrechen des Übertragungspfades eine zwischen diesem Dateneingang und -ausgang geschaltete Tor-Anordnung enthalten.

Die Erfindung wird nachstehend anhand der Zeichnung näher erläutert: Es zeigen

Fig. 1 ein Blockschaltbild der erfindungsgemäßen Datenübertragungseinrichtung,

Fig. 2 einen dafür geeigneten Datenübertragungsknoten,

Fig. 3 den zeitlichen Verlauf eines Ausschnitts aus einem in dem Ring zu übertragenden Signal.

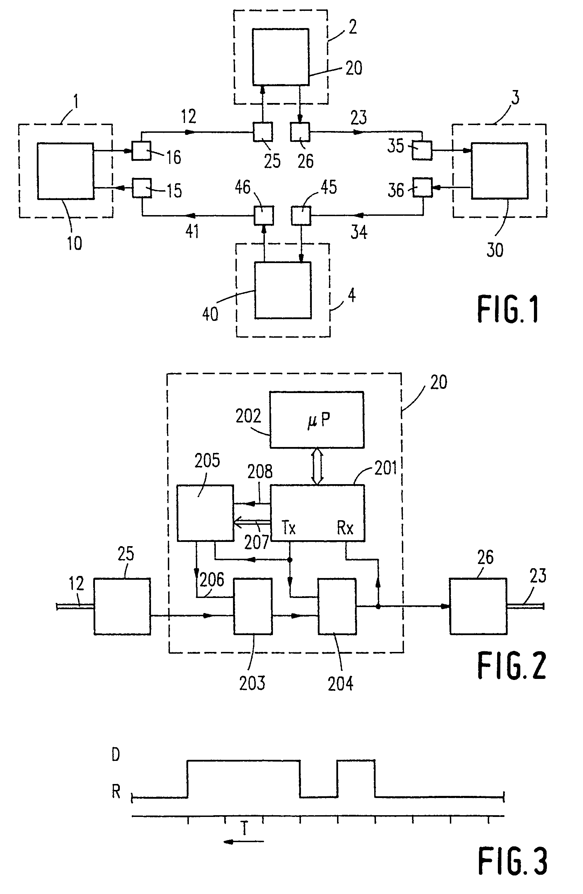

In Fig. 1 sind mit 1..4 vier Komponenten einer Röntgenanlage bezeichnet, beispielsweise ein Röntgengenerator und mehrere Röntgengeräte, jedoch kann es sich auch um die Baugruppen eines Röntgengenerators handeln, beispielsweise Heiz-kreis, Röhrenspannungsstellglied, Dosisleistungsre-gler usw.

Jeder der vier Baugruppen ist je ein Datenübertragungsknoten 10...40 zugeordnet. Die Dateneingänge dieser Knoten sind mit den Ausgängen je eines Lichtempfängers 15...45 verbunden, während die Datenausgänge der Knoten jeweils mit dem Eingang eines Lichtsenders 16...46 verbunden sind. Vier Lichtwellenleiter 12, 23, 34, 41 verbinden jeweils einen Lichtsender mit einem Lichtempfänger (eines anderen Knotens), so daß sich ein Datenübertragungsring ergibt. In diesem Ring durchläuft beispielsweise ein Signal vom Datenübertragungsknoten 20 zunächst die Knoten 30 und 40, bevor es zum Knoten 10 gelangt.

Fig. 2 stellt das Blockschaltbild des Datenübertragungsknotens 20 dar; die anderen Datenübertragungsknoten haben den gleichen Aufbau.

Jeder Knoten enthält einen Mikroprozessor und einen Datenübertragungsbaustein 201, der die Kommunikation mit den anderen Knoten bewirkt. Dieser Baustein ist ein CAN-Controller, d.h. ein Baustein, der nach dem CAN-Protokoll arbeitet. Solche Bausteine werden von Philips unter der Bezeichnung PCA 82C200 sowie von Intel unter der Nummer 82526 vertrieben. Letztgenannter sowie das zugehörige CAN-Protokoll ist in der Intel-Broschüre "82526 Serial Communication Controller Architektureal Overview" (Order Number: 270678-001) sowie in der Zeitschrift Elektronik (Nr. 25 vom 8.12.1989 Seite 79-83 und Nr. 12 vom 8.6.1990 Seite 109 bis 114) beschrieben.

Nach dem CAN-Protokoll werden Daten durch die beiden logischen Pegel "dominant" und "recessive" definiert. Ein dominantes Bit ergibt sich auf der die Knoten verbindenden (Bus)-Leitung, wenn ein oder mehrere Knoten ein dominantes Bit senden. Ein rezessives Bit erscheint nur dann, wenn alle Knoten ein solches Bit erzeugen. Die Informationscodierung erfolgt durch einen NRZ-Code, d.h. daß sich der logische Pegel bei z.B. drei aufeinanderfolgenden Bits der gleichen Art nicht ändert. Fig. 3 zeigt einen typischen Ausschnitt aus einem derartigen Signal, wobei mit D der dominante und mit R der rezessive Pegel bezeichnet ist. T ist die Dauer eines Bits und beträgt z.B. 10 $\mu$s. Sendet einer der Knoten 10..40 ein dominantes Bit aus, dann wird mit dem zugehörigen Lichtsender 16...46 ein Lichtimpuls der Dauer T erzeugt. Bei einem rezessiven Bit wird kein Licht erzeugt.

Nach dem CAN-Protokoll werden Nachrichten innerhalb eines Datenrahmens von maximal 126 Bits übertragen, der neben den eigentlich zu übertragenden Daten u.a. einen aus einer festen Zahl von Bits bestehenden "Identifier" enthält. Dieser kennzeichnet die Art der zu übertragenden Nachricht, d.h. unterschiedliche Arten von Nachrichten (bei einem Röntgengenerator beispielsweise die Größe des Heizstroms einerseits und die Höhe der Röhrenspannung andererseits) werden durch unterschiedliche Identifier gekennzeichnet. Wenn zwei Datenknoten gleichzeitig mit der Aussendung einer Nachricht beginnen, was nach dem CAN-Protokoll möglich ist, werden während der sogenannten Arbitrations-Phase die beiden Identifier der Nachrichten miteinander verglichen, wonach derjenige Knoten das Senden des weiteren Teils des Datenrahmens einstellt, dessen Identifier zuerst ein rezessives Bit enthält. Bezüglich weiterer Einzelheiten wird auf die vorgenannten Literaturstellen verwiesen.

Neben den erwähnten Komponenten 201 und 202 enthält jeder Datenübertragungsknoten noch zwei Torschaltungen 203 und 204 sowie einen Zähler 205. Ein Eingang der Torschaltung 203 ist mit einem Ausgang des Lichtempfängers 25 verbunden. Der andere Eingang dieser Torschaltung ist über eine Leitung 206 mit dem Zähler 205 verbunden. Dadurch wird die Torschaltung 203 immer dann gesperrt, wenn der Zählerstand von Null verschieden ist. Der Ausgang der Torschaltung 203 ist mit einem Eingang der Torschaltung 204 verbunden, so daß diese gesperrt ist, wenn auch die Torschaltung 203 gesperrt ist. Der andere Eingang der Torschaltung 204 ist mit dem seriellen Datenausgang Tx des CAN-Controllers 201 verbunden, während sein Ausgang mit dem Eingang des Lichtsenders 26 verbunden ist. Der serielle Dateneingang $R_x$ des CAN-Controllers 201 ist ebenfalls mit dem Ausgang der Torschaltung 204 verbunden; er kann jedoch auch woanders angeschlossen sein, beispielsweise an den Ausgang des Lichtempfängers 22. Wenn die Torschaltung 204 nicht gesperrt ist, erzeugt der Lichtsender 25 einen Lichtimpuls 23, wenn am seriellen Datenausgang Tx ein dominantes Bit D erscheint.

Der serielle Datenausgang Tx ist außerdem mit einem Setzeingang es Zählers 205 verbunden, wodurch bei einem Übergang des Signals am Ausgang Tx von D nach R der Zähler 205 auf einen festen Wert gesetzt wird, der über eine Datenleitung 207 vom CAN-Controller vorgegeben wird. Der Zähler zählt dann die über die Leitung 208 zugeführten Clock-Impulse abwärts, deren Frequenz beispielsweise 10 MHz beträgt, bis wieder der Zählerstand 0 erreicht ist.

Im Empfangsbetrieb des Datenübertragungsknotens 20 steht der Zähler 205 auf Null, so daß die Tore 203 und 204 nicht gesperrt sind. Ein Lichtimpuls auf dem Lichtwellenleiter 12 wird dann von dem Lichtempfänger 25 in ein elektrisches Signal umgesetzt und über die Torschaltungen 203 und 204 einerseits dem seriellen Dateneingang Rx des CAN-Controllers 201 und andererseits dem Eingang des Lichtsenders 26 zugeführt, der daraufhin über die Leitung 23 einen Lichtimpuls aussendet, der vom folgenden Datenknoten auf entsprechende Weise verarbeitet wird.

Im Sendebetrieb des Datenknotens 20 erzeugt der CAN-Controller 201 an seinem seriellen Datenausgang Tx ein Signal, das aus einer Folge von dominanten und rezessiven Bits besteht. Ein dominantes Bit erreicht über die Torschaltung 204 den Lichtsender 26, der daraufhin auf den Lichtwellenleiter 23 einen Lichtimpuls erzeugt. Dieser wird von dem Datenknoten 30 in dem schon beschriebenen Empfangsbetrieb mit einer von dem Schaltverhalten seiner Torschaltungen und seines Lichtempfängers 35 bzw. Lichtsenders 36 abhängigen Verzögerungszeit in einen Lichtimpuls auf der Leitung 34 umgesetzt (Fig. 1). Dieser hat einen Lichtimpuls auf dem Lichtwellenleiter 41 zur Folge, der seinerseits einen Lichtimpuls auf der Leitung 12 hervorruft, die zu dem das dominante Bit aussendenden Datenknoten 20 führt. Die Zeit $T_u$, die ein Lichtimpuls auf diese Weise für einen Umlauf benötigt, hängt von der durch einen Knoten hervorgerufenen Verzögerungszeit sowie von der Zahl der Knoten ab und beträgt z.B. 800 ns. Sie muß kleiner sein als die Übertragungszeit T für ein Bit, vorzugsweise klein im Vergleich dazu.

Wenn die Übertragungszeit für ein Bit - oder bei mehreren aufeinanderfolgenden dominanten Bits deren Gesamtübertragungszeit - beendet ist, endet auch der vom Lichtsender 26 erzeugte Lichtimpuls. Gleichzeitig wird der Zähler 205 auf den vorgegebenen Zählerstand gesetzt, so daß die Torschaltungen 203 und 204 gesperrt werden bzw. der Übertragungspfad zwischen Lichtempfänger 25 und Lichtsender 26 unterbrochen wird. Der danach noch am Lichtempfänger 25 eingehende Rest des Lichtimpulses bzw. das dadurch am Ausgang des Lichtempfängers 25 erzeugte elektrische Signal kann nicht zum Eingang des Lichtsenders 26 gelangen (und diesen zur erneuten Aussendung eines Lichtimpulses veranlassen), wenn die Sperrzeit $T_s$, während der die Tore 203 und 204 gesperrt sind, größer ist als die Umlaufzeit $T_u$. Wenn $T_u$ 800 ns beträgt, kann $T_s$ z.B. 900 ns betragen. Bei einer Frequenz der Clockimpulse auf der Leitung 208 von 10 MHz wird eine solche Sperrzeit $T_s$ erreicht, wenn der Zähler auf einen Wert 9 gesetzt wird.

Wenn gleichzeitig mit dem Knoten 20 auch noch ein anderer Datenübertragungsknoten zu senden beginnt, muß der Knoten 20 an seinem seriellen Dateneingang Rx in der Arbitrierungsphase die vom anderen Knoten erzeugten Daten empfangen können, um den Sendebetrieb einstellen zu können, wenn er ein rezessives Bit sendet und ein dominantes (vom anderen Knoten) empfängt. Da der Übertragungspfad vom Lichtempfänger 25 zum seriellen Dateneingang Rx nur kurzzeitig unterbrochen bzw. die Torschaltung 203, 204 nur kurzzeitig (d.h. während eines im Vergleich zur Dauer der Übertragung eines Bits kleinen Zeitraums) gesperrt ist, ist dieser Forderung Genüge getan. Aus diesem Grund soll die Zeit $T_s$ nicht beliebig groß gemacht werden, sondern nur so groß, wie gerade nötig.

**Patentansprüche**

1. Datenübertragungseinrichtung, insbesondere für eine Röntgenanlage, mit mehreren Komponenten, denen je ein Datenübertragungsknoten zugeordnet ist, deren Datenein- und -ausgänge mit Lichtempfängern bzw. mit Lichtsendern gekoppelt sind, die über Lichtwellenleiter zu einem Ring zusammengeschaltet sind,
   dadurch gekennzeichnet, daß jeder Knoten (10..40) Mittel (203,204) zum Unterbrechen des Übertragungspfades zwischen seinem Lichtempfänger und seinem Lichtsender enthält und ein die Mittel steuerndes Zeitglied (205), das im Sendebetrieb des zugehörigen Datenübertragungsknotens diese Mittel während eines Zeitraums ($T_s$) aktiviert, der größer ist als die Umlaufzeit ($T_u$) eines Lichtimpulses im Ring und der am Ende eines Lichtimpulses beginnt.

2. Datenübertragungseinrichtung nach Anspruch 1,
   dadurch gekennzeichnet, daß der Datenübertragungsknoten (20) einen Datenbaustein (201) enthält, bei dem die an seinem Dateneingang ($R_x$) erscheinenden Daten nicht zum Ausgang ($T_x$) weitergegeben werden und daß die Mittel zum Unterbrechen des Übertragungspfades eine zwischen diesem Dateneingang und -ausgang geschaltete Toranordnung (203,204) enthalten.

3. Datenübertragungseinrichtung nach einem der Ansprüche 1 oder 2,
   dadurch gekennzeichnet, daß das Zeitglied einen Impulse mit fester Frequenz zählenden Zähler (205) enthält, der am Ende eines Lichtimpulses auf einen ersten Zählerstand gesetzt wird und die Mittel (203,204) zum Unterbrechen des Übertragungspfades sperrt, bis ein zweiter Zählerstand erreicht ist, wobei der erste und der zweite Zählerstand so an die Zählfrequenz angepaßt sind, daß der beim Zählen vom ersten zum zweiten Zählerstand verstreichende Zeitraum ($T_s$) größer ist als die Umlaufzeit ($T_u$) eines Lichtimpulses in dem Ring.

FIG.1

FIG.2

FIG.3